# EUROPEAN PATENT SPECIFICATION

(11) **EP 4 622 735 B1**
(45) Date of publication and mention of the grant of the patent: **11.11.2026**
(21) Application number: 23828472.3
(22) Date of filing: 22.11.2023
(51) Int. Cl.: B01F 27/07

(54) **A MIXER FOR BIOGAS FERMENTERS, AND METHOD FOR THE ASSEMBLY THEREOF**
MISCHER FÜR BIOGASFERMENTER UND VERFAHREN ZU DESSEN MONTAGE
MÉLANGEUR DESTINÉ AUX FERMENTEURS DE BIOGAZ, ET SON PROCÉDÉ D'ASSEMBLAGE

(30) Priority: 23.11.2022 IT 202200024120
(43) Date of publication of application: 01.10.2025
(73) Proprietor: Biogas Engineering S.r.l., 36025 Noventa Vicentina (VI) (IT)
(72) Inventor: ZOIA, Luciano, 35034 Lozzo Atestino (Padova) (IT); D'AMICO, Francesco, 87040 Montalto Uffuga (Cosenza) (IT)
(74) Representative: Savoca, Agatino
(86) International application number: PCT/IB2023/061795
(87) International publication number: WO 2024/110895

(56) References cited:
- EP-A1- 0 836 880
- CH-A5- 615 603
- DE-B- 1 122 355
- US-A1- 2016 121 277

## Description

### Technical field

The present invention is generally in the field of fermentation plants for waste organic materials, for the production of biogas; in particular, the invention relates to a mixer for biogas fermenters, and a method for the assembly thereof.

### Summary of the invention

Fermentation plants for biogas production are known to include tanks or reservoirs into which organic material is poured and allowed to ferment.

The material is continuously stirred by mixers comprising a plurality of stirring elements, typically in the form of blades brought into rotation by rotating shafts housed in these tanks.

The stirring elements generally comprise a fork-shaped root, which straddles the shaft and is attached thereto by bolts.

A solution of the aforementioned type is known from EP 2837421 A1, wherein the ends of the attachment fork are bolted to plates radially protruding from opposite sides of the shaft.

However, this configuration does not allow for an appreciably stable attachment of the blade to the shaft, since the root of the blade will be constrained only to the aforesaid plates, and radial play will still remain between the fork and the shaft.

Alternatively, the prior art includes the solution of applying a mounting structure in the form of projections with a substantially triangular shape that are reciprocally parallel and axially spaced apart. Such projections, which extend over an angular portion of the shaft, have a circumferential discontinuity, wherein the stem of the stirring blade, has a double T section, wherein the front faces thereof are welded to the edges of the projections which protrude from the shaft perpendicularly to the outer surface of the latter.

One solution of the aforementioned type, wherein the projections act, substantially, as circumferential buttresses for the stem of the blade, is known, for example, from the document EP 1841853 A1.

Such solution, however, has problems as regards, for example, the dimensional tolerances required for the attachment of the blade to the projections, and the fatigue incurred by the joint welds of the stem at the buttresses. In fact, insofar as the welding is limited to the radial profiles of the projections, these are required to be highly extended (in order to maximize the length of the welding beads, which, as a function of diameter of the shaft, may result in problems in relation to space and feasibility issues), the tangential forces acting upon the blade would otherwise be supported by welding seams that are too short. In a different manner, a mixer according to the invention comprises a rotating shaft and at least one stirring element fixed to the shaft by means of the tangential attachment of a pair of attachment plates, radially protruding from the shaft and extended circumferentially along an angular arc of the same, which attachment plates have connection surfaces mutually facing and spaced apart along the axial direction of the shaft, which is fixed on both sides of the root of a fork of the stirring element (a root which straddles the shaft). One configuration of the above type is known from documents US 2016/121277 A1 and EP 0 836 880 A1, which disclose the preamble of claim 1.

Other than such characteristics, there is a pair of radial projections, attached to the shaft on opposite sides thereof and facing (in an integral or non-integral manner) the circumferential ends of such attachment plates. The projections may conveniently be decoupled from the attachment plates and/or from the forks of the blades, and may act as circumferential ends of travel against which the attachment plates and/or the forks of the blade are alternately abutted, should the latter slide circumferentially in relation to the shaft due to the resistance offered by the fermenting material to the rotation of the mixer.

With a mixer configured according to the present invention, circumferential stresses at the root of the stirring element bear upon the weld up and until possibly causing it to break, at the same time containing any encumbrances and facilitating the assembly of the stirring element of the shaft, insofar as the attachment plates transmit a more gradual and homogeneous tangential force to the shaft.

The aforesaid and other objects and advantages are achieved, according to one aspect of the invention, by a mixer for biogas fermenters and a method for the assembly thereof having the features defined in the appended claims.

### Brief description of the drawings

The functional and structural features of some preferred embodiments of a mixer for biogas fermenters and a method for the assembly thereof according to the invention will now be described. Reference is made to the accompanying drawings, wherein:

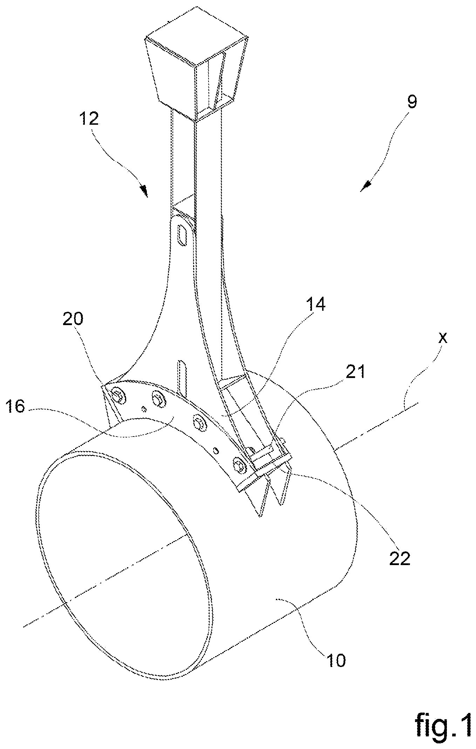

- Figure 1 is a schematic perspective view of a mixer portion in an assembled condition according to one embodiment of the invention;
- Figures 2 and 3 are respectively a front schematic and an axial view of the mixer in Figure 1; and

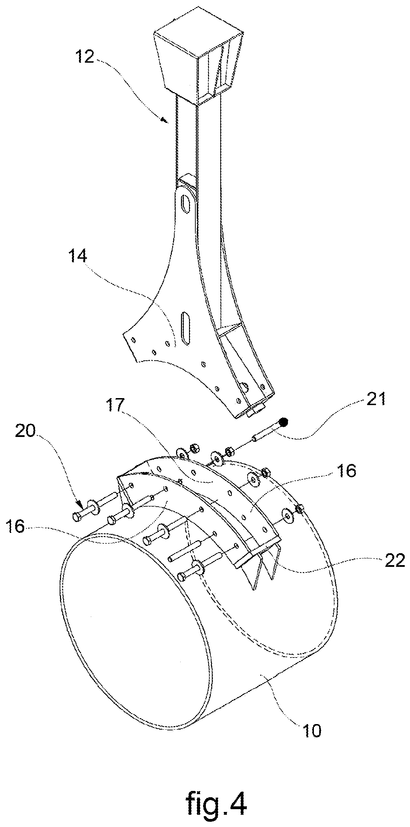

- Figure 4 is a schematic perspective view of the mixer in Figure 1 in an exploded condition according to one embodiment of the invention.

### Detailed description

Before explaining in detail a plurality of embodiments of the invention, it should be clarified that the invention is not limited in the application thereof to the design details and configuration of the components presented in the following description or shown in the drawings. The invention may assume other embodiments and be implemented or constructed in practice in different ways. It should also be understood that the phraseology and terminology have a descriptive purpose and should not be construed as limiting.

Referring by way of example to the figures, a mixer 9 for biogas fermenters, suitable for stirring a fermenting material, comprises a shaft 10, rotatable about an axis of rotation x, and a stirring element 12, comprising an attachment portion 14 configured to circumferentially embrace part of the shaft 10.

The attachment portion 14 of the stirring element 12 will therefore substantially have a fork shape that is suitable for straddling the shaft 10. The stirring element 12 may be in contact with the shaft 10 along a pair of circular arc profiles defined by the inner edges of the attachment portion 14.

There is also a pair of attachment plates 16, radially protruding from the shaft 10 and extended circumferentially along an angular arc of said shaft 10.

The attachment plates 16 have respective connection surfaces 17 mutually facing and spaced apart along the axial direction of the shaft 10.

The attachment portion 14 of the stirring element 12 is fixed (preferably, from both sides thereof) to such connection surfaces 17 of the attachment plates 16 and/or a radially outer edge 18 of each of said attachment plates 16, extended for a circumferential arc of the shaft 10 and contiguous to a respective connection surface 17.

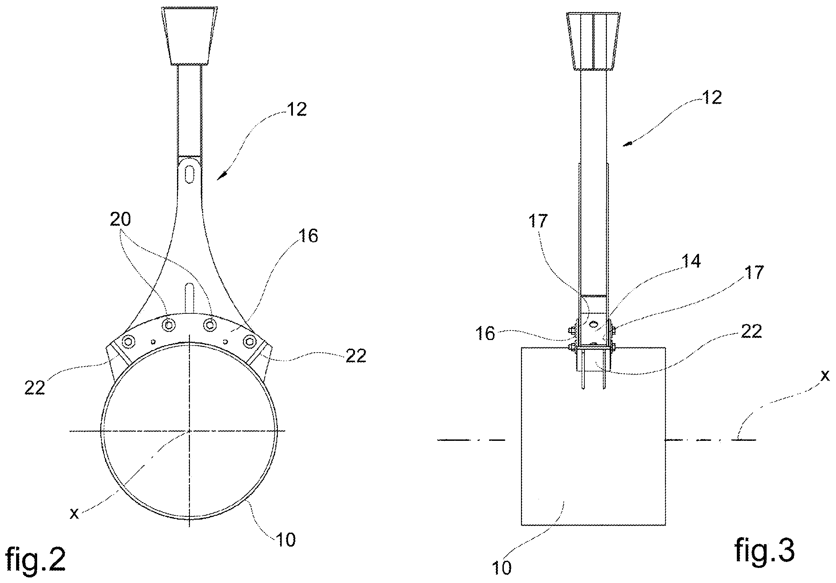

The attachment plates 16 are preferably configured in such a way that the respective connection surfaces 17 laterally face onto the attachment portion 14 of the stirring element 12 (i.e., so as to be facing the sides of such attachment portion 14 lying on respective planes perpendicular to the axis of the shaft 10, according to a point of view consistent with Figure 2).

Preferably, the attachment plates 16 are projections that are welded to the shaft 10, along a radially inner edge thereof (of a conveniently arched shape, whilst said radially outer edge 18 may have any other profile that is not necessarily parallel to the outer profile of the shaft.)
The connection plates 16 preferably have a negligible axial thickness, and the respective connection surfaces 17 therefore lie on planes that are distinct and parallel to each other and that transversely intersect the shaft 10.

According to one embodiment (not shown), the attachment portion 14 of the stirring element 12 is welded in at least one point to the connection surfaces 17 of the attachment plates 16 and/or a radially outer edge 18 of each of said attachment plates 16, extended for a circumferential arc of the shaft 10 and contiguous to a respective connection surface 17. The attachment portion 14 of the stirring element 12 may furthermore be welded to said radially outer edges 18 of the attachment plates 16 in a continuous manner along the most part of the angular extension of such edges 18, or at a plurality of points angularly spaced along said edges 18 (where the welding points on axially opposite sides of the stirring element 12 may in turn be angularly staggered). The term welding "points" refers to substantially circumferential punctiform sections, or at least of a negligible circumferential extent compared to the extension of the edge 18 of the attachment plate 16.

According to one embodiment, the attachment portion 14 of the stirring element 12 is bolted to the connection surfaces 17 of the attachment plates 16 at one or more points.

To this end, there can be one or more retaining means 20 that include elongated elements 21, at least partially threaded and passing axially through both attachment plates 16, wherein such elongated elements 21 extend for the whole axial distance between the connection surfaces 17 and are bound at their ends to each of such attachment plates 16. Furthermore, a pair of projections 22 is also provided, radially protruding from the shaft 10 (for example, from diametrically opposite parts of the latter), said projections 22 facing each other at respective circumferential ends of the attachment plates 16 and/or of the attachment portion 14 of the stirring element 12.

Each projection 22 is configured to form an abutment against which the respective circumferential ends of the attachment plates 16 and/or the attachment portion 14 may abut, avoiding that the projection 22 and the respective circumferential ends of the attachment plates 16 and/or of the attachment portion (14) are mutually fixed or integral, so that, in a rest condition of the mixer 9, the projections 22 are angularly spaced apart from the respective circumferential ends of the attachment plates 16 and/or the attachment portion 14 of the stirring element 12.

Preferably, the projections 22 are configured to alternately form an abutment against which the respective circumferential ends of the attachment plates 16 and/or of the attachment portion 14 of the stirring element 12 may abut when, due to the resistance opposed by the fermenting material to the rotation of the mixer 9, such elements undergo or tend to undergo an angular elastic deformation and/or sliding with respect to the shaft 10 exceeding a predetermined magnitude.

In this case, the projections 22 may impede angular sliding of the attachment plates 16 and/or the attachment portion 14 in relation to the shaft 10 along a circumferential direction (that which is distal in relation to the direction of rotation of the shaft), and allow angular sliding of the attachment plates 16 and/or of the attachment portion 14 in relation to the shaft 10 along an opposite circumferential direction.

In the example shown in the figures from 1 to 4, each projection 22 is instead integral to the respective circumferential ends of the attachment plates 16. In this way, the attachment plates 16 define, together with the projections 22, a closed profile assembly enclosure.

The projections 22 may be shaped as a pair of braces and wings (conveniently planar), lying on a diametric plane of the shaft 10 and radially protruding towards the outside of the latter, or else (according to a preferred embodiment) lying on mutually incident radial planes (as in the example shown, wherein the attachment plates 16 extend for an angular section of the shaft 10 of less than 180°, although such condition is not limiting).

According to one aspect of the invention, a method for assembling a mixer for biogas fermenters comprises the steps of providing a shaft 10, configured to rotate about an axis of rotation x; providing a stirring element 12, comprising an attachment portion 14 configured to circumferentially embrace part of the shaft 10; fixing (for example by means of welding) to the shaft 10 a pair of attachment plates 16, radially protruding from such shaft 10 and extending circumferentially along an angular arc of the same, such attachment plates 16 having respective connection surfaces 17 facing each other and spaced apart along the axial direction of the shaft 10; and fixing the attachment portion 14 of the stirring element 12 to such connection surfaces 17 of the attachment plates 16 and/or to a radially outer edge 18 of each of said attachment plates 16, extended over a circumferential arc of the shaft 10 and contiguous to a respective connection surface 17.

There is also the step of fixing a pair of projections 22 to the shaft 10, radially protruding from the shaft 10 from diametrically opposite parts of said shaft 10, said projections 22 facing each other at respective circumferential ends of the attachment plates 16, so that each projection 22 is configured to form an abutment against which the respective circumferential ends of the attachment plates 16 and/or of the attachment portion 14, avoiding that the projection 22 and the respective circumferential ends of the attachment plates 16 and/or of the attachment portion 14 are mutually fixed or integral, so that, in a rest condition of the mixer 9, the projections 22 are angularly spaced apart from the respective circumferential ends of the attachment plates 16 and/or of the attachment portion 14 of the stirring element (12).

Preferably, the step of fixing the stirring element 12 to the shaft 10 is carried out by welding such attachment portion 14 in at least one point to the connection surfaces 17 of the attachment plates 16 and/or a radially outer edge 18 of each of said attachment plates 16, extended over a circumferential arc of the shaft 10 and contiguous to a respective connection surface 17, or by bolting said attachment portion 14 to the connection surfaces 17 of the attachment plates 16 at one or more points.

Furthermore, throughout this description and in the claims, the terms and expressions indicating positions and orientations, such as "axial" or "radial," refer to the axis of rotation x of the shaft 10.

Various aspects and embodiments of a mixer for biogas fermenters and a method for the assembly thereof according to the invention have been described. It is understood that each embodiment may be combined with any other embodiment. Moreover, the invention is not limited to the embodiments described, but may be varied within the scope defined by the appended claims.

## Claims

1. A mixer (9) for biogas fermenters, suitable for stirring a fermenting material, said mixer comprising:
- a shaft (10), rotatable around an axis of rotation (x);
- a stirring element (12), comprising an attachment portion (14) configured to circumferentially embrace part of the shaft (10); and
- a pair of attachment plates (16), radially protruding from the shaft (10) and extending circumferentially along an angular arc of said shaft (10), said attachment plates (16) having respective connection surfaces (17) mutually facing each other and spaced along the axial direction of the shaft (10);
wherein the attachment portion (14) of the stirring element (12) is fixed to said connection surfaces (17) of the attachment plates (16) and/or to a radially outer edge (18) of each of said attachment plates (16), extended for a circumferential arc of the shaft (10) and contiguous to a respective connection surface (17);
**characterized by** the fact that it comprises a pair of projections (22), radially protruding from the shaft (10) from parts that are diametrically opposite said shaft (10), said projections (22) facing each other at respective circumferential ends of the attachment plates (16), each projection (22) being configured to form an abutment against which the respective circumferential ends of the attachment plates (16) and/or the attachment portion (14), avoiding that the projection (22) and the respective circumferential ends of the attachment plates (16) and/or of the attachment portion (14) are mutually fixed or integral, so that, in a rest condition of the mixer (9), the projections (22) are angularly spaced apart from the respective circumferential ends of the attachment plates (16) and/or the attachment portion (14) of the stirring element 12.

2. A mixer according to claim 1, wherein the attachment portion (14) of the stirring element (12) is welded in at least one point to the connection surfaces (17) of the attachment plates (16) and/or to a radially outer edge (18) of each of said attachment plates (16), extended for a circumferential arc of the shaft (10) and contiguous to a respective connection surface (17).

3. A mixer according to claim 2, wherein the attachment portion (14) of the stirring element (12) is welded to said radially outer edges (18) of the attachment plates (16) in a continuous manner along the most part of the angular extension of said edges (18).

4. A mixer according to claim 2, wherein the attachment portion (14) of the stirring element (12) is welded to said radially outer edges (18) of the attachment plates (16) at a plurality of points angularly spaced along said edges (18).

5. A mixer according to claim 1, wherein the attachment portion (14) of the stirring element (12) is bolted to the connection surfaces (17) of the attachment plates (16) at one or more points.

6. A mixer according to claim 5, comprising one or more retaining means (20) which include elongated elements (21), at least partially threaded and passing axially through both attachment plates (16), said elongated elements (21) extending for the whole axial distance between the connection surfaces (17) and being connected at their ends to each of said attachment plates (16).

7. A mixer according to claim 1, wherein each projection (22) is integral with the respective circumferential ends of the attachment plates (16).

8. A method for assembling a biogas fermenter mixer, including the steps of:
a) providing a shaft (10);
b) providing at least one stirring element (12), comprising an attachment portion (14) configured to circumferentially embrace part of the shaft (10);
c) fixing to the shaft (10) a pair of attachment plates (16), radially protruding from the shaft (10) and extending circumferentially along an angular arc of said shaft (10), said attachment plates (16) having respective connection surfaces (17) facing each other and spaced apart along the axial direction of the shaft (10); and fixing a pair of projections (22) to the shaft (10), radially protruding from the shaft (10) from diametrically opposite parts of said shaft (10), said projections 22 facing each other at respective circumferential ends of the attachment plates (16) and/or of the attachment portion (14), avoiding that the projection (22) and the respective circumferential ends of the attachment plates (16) and/or of the attachment portion (14) is mutually fixed or integral, so that, in a rest condition of the mixer (9), the projections (22) may be angularly spaced apart from the respective circumferential ends of the attachment plates (16) and/or of the attachment portion (14) of the stirring element (12); and
d) fixing said attachment portion (14) of the stirring element (12) to said connection surfaces (17) of the attachment plates (16) and/or to a radially outer edge (18) of each of said attachment plates (16), extended over a circumferential arc of the shaft (10) and contiguous to a respective connection surface (17).

9. A method according to claim 8, wherein step d) is carried out by welding the attachment portion (14) in at least one point to the connection surfaces (17) of the attachment plates (16) and/or to a radially outer edge (18) of each of said attachment plates (16), extending for a circumferential arc of the shaft (10) and contiguous to a respective connection surface (17), or by bolting said attachment portion (14) to the connection surfaces (17) of the attachment plates (16) in one or more points.

## Patentansprüche

1. Mischer (9) für Biogasfermenter, geeignet zum Rühren eines fermentierenden Materials, wobei der Mischer umfasst:
- eine Welle (10), die um eine Drehachse (x) drehbar ist;
- ein Rührelement (12), umfassend einen Befestigungsabschnitt (14), der dazu ausgebildet ist, einen Teil der Welle (10) in Umfangsrichtung zu umgreifen; und
- ein Paar Befestigungsplatten (16), die radial von der Welle (10) vorstehen und sich in Umfangsrichtung entlang eines Winkelbogens der Welle (10) erstrecken, wobei die Befestigungsplatten (16) jeweilige Verbindungsflächen (17) aufweisen, die einander zugewandt und entlang der axialen Richtung der Welle (10) voneinander beabstandet sind;
wobei der Befestigungsabschnitt (14) des Rührelements (12) an den Verbindungsflächen (17) der Befestigungsplatten (16) und/oder an einem radial äußeren Rand (18) jeder der Befestigungsplatten (16) befestigt ist, der sich über einen Umfangsbogen der Welle (10) erstreckt und an eine jeweilige Verbindungsfläche (17) angrenzt;
**dadurch gekennzeichnet, dass** er ein Paar Vorsprünge (22) umfasst, die radial von der Welle (10) aus diametral gegenüberliegenden Teilen der Welle (10) vorstehen, wobei die Vorsprünge (22) einander an jeweiligen Umfangsenden der Befestigungsplatten (16) zugewandt sind, wobei jeder Vorsprung (22) dazu ausgebildet ist, einen Anschlag zu bilden, gegen den die jeweiligen Umfangsenden der Befestigungsplatten (16) und/oder der Befestigungsabschnitt (14) anschlagen, wobei vermieden wird, dass der Vorsprung (22) und die jeweiligen Umfangsenden der Befestigungsplatten (16) und/oder des Befestigungsabschnitts (14) miteinander befestigt oder einstückig sind, so dass in einem Ruhezustand des Mischers (9) die Vorsprünge (22) von den jeweiligen Umfangsenden der Befestigungsplatten (16) und/oder dem Befestigungsabschnitt (14) des Rührelements 12 winkelmäßig beabstandet sind.

2. Mischer nach Anspruch 1, wobei der Befestigungsabschnitt (14) des Rührelements (12) an mindestens einem Punkt mit den Verbindungsflächen (17) der Befestigungsplatten (16) und/oder mit einem radial äußeren Rand (18) jeder der Befestigungsplatten (16) verschweißt ist, der sich über einen Umfangsbogen der Welle (10) erstreckt und an eine jeweilige Verbindungsfläche (17) angrenzt.

3. Mischer nach Anspruch 2, wobei der Befestigungsabschnitt (14) des Rührelements (12) mit den radial äußeren Rändern (18) der Befestigungsplatten (16) durchgehend entlang des größten Teils der Winkelerstreckung der Ränder (18) verschweißt ist.

4. Mischer nach Anspruch 2, wobei der Befestigungsabschnitt (14) des Rührelements (12) mit den radial äußeren Rändern (18) der Befestigungsplatten (16) an einer Vielzahl von entlang der Ränder (18) winkelmäßig beabstandeten Punkten verschweißt ist.

5. Mischer nach Anspruch 1, wobei der Befestigungsabschnitt (14) des Rührelements (12) an einem oder mehreren Punkten mit den Verbindungsflächen (17) der Befestigungsplatten (16) verschraubt ist.

6. Mischer nach Anspruch 5, umfassend ein oder mehrere Haltemittel (20), die längliche Elemente (21) umfassen, die zumindest teilweise mit einem Gewinde versehen sind und beide Befestigungsplatten (16) axial durchsetzen, wobei sich die länglichen Elemente (21) über den gesamten axialen Abstand zwischen den Verbindungsflächen (17) erstrecken und an ihren Enden mit jeder der Befestigungsplatten (16) verbunden sind.

7. Mischer nach Anspruch 1, wobei jeder Vorsprung (22) mit den jeweiligen Umfangsenden der Befestigungsplatten (16) einstückig ist.

8. Verfahren zur Montage eines Mischers für einen Biogasfermenter, umfassend die Schritte:
a) Bereitstellen einer Welle (10);
b) Bereitstellen mindestens eines Rührelements (12), umfassend einen Befestigungsabschnitt (14), der dazu ausgebildet ist, einen Teil der Welle (10) in Umfangsrichtung zu umgreifen;
c) Befestigen eines Paars Befestigungsplatten (16) an der Welle (10), die radial von der Welle (10) vorstehen und sich in Umfangsrichtung entlang eines Winkelbogens der Welle (10) erstrecken, wobei die Befestigungsplatten (16) jeweilige Verbindungsflächen (17) aufweisen, die einander zugewandt und entlang der axialen Richtung der Welle (10) voneinander beabstandet sind; und Befestigen eines Paars Vorsprünge (22) an der Welle (10), die radial von der Welle (10) aus diametral gegenüberliegenden Teilen der Welle (10) vorstehen, wobei die Vorsprünge 22 einander an jeweiligen Umfangsenden der Befestigungsplatten (16) und/oder des Befestigungsabschnitts (14) zugewandt sind, wobei vermieden wird, dass der Vorsprung (22) und die jeweiligen Umfangsenden der Befestigungsplatten (16) und/oder des Befestigungsabschnitts (14) miteinander befestigt oder einstückig sind, so dass in einem Ruhezustand des Mischers (9) die Vorsprünge (22) von den jeweiligen Umfangsenden der Befestigungsplatten (16) und/oder des Befestigungsabschnitts (14) des Rührelements (12) winkelmäßig beabstandet sein können; und
d) Befestigen des Befestigungsabschnitts (14) des Rührelements (12) an den Verbindungsflächen (17) der Befestigungsplatten (16) und/oder an einem radial äußeren Rand (18) jeder der Befestigungsplatten (16), der sich über einen Umfangsbogen der Welle (10) erstreckt und an eine jeweilige Verbindungsfläche (17) angrenzt.

9. Verfahren nach Anspruch 8, wobei Schritt d) durch Verschweißen des Befestigungsabschnitts (14) an mindestens einem Punkt mit den Verbindungsflächen (17) der Befestigungsplatten (16) und/oder mit einem radial äußeren Rand (18) jeder der Befestigungsplatten (16), der sich über einen Umfangsbogen der Welle (10) erstreckt und an eine jeweilige Verbindungsfläche (17) angrenzt, oder durch Verschrauben des Befestigungsabschnitts (14) an einem oder mehreren Punkten mit den Verbindungsflächen (17) der Befestigungsplatten (16) ausgeführt wird.

## Revendications

1. Un mélangeur (9) pour fermenteurs de biogaz, adapté pour brasser une matière en fermentation, ledit mélangeur comprenant :
- un arbre (10), rotatif autour d'un axe de rotation (x) ;
- un élément d'agitation (12), comprenant une portion de fixation (14) configurée pour entourer circonférentiellement une partie de l'arbre (10) ; et
- une paire de plaques de fixation (16), faisant saillie radialement depuis l'arbre (10) et s'étendant circonférentiellement le long d'un arc angulaire dudit arbre (10), lesdites plaques de fixation (16) ayant des surfaces de connexion respectives (17) mutuellement tournées l'une vers l'autre et espacées suivant la direction axiale de l'arbre (10) ; dans lequel la portion de fixation (14) de l'élément d'agitation (12) est fixée auxdites surfaces de connexion (17) des plaques de fixation (16) et/ou à un bord radialement extérieur (18) de chacune desdites plaques de fixation (16), s'étendant sur un arc circonférentiel de l'arbre (10) et contigu à une surface de connexion respective (17) ; **caractérisé en ce qu'**il comprend une paire de saillies (22), faisant saillie radialement depuis l'arbre (10) à partir de parties diamétralement opposées dudit arbre (10), lesdites saillies (22) étant tournées l'une vers l'autre au niveau d'extrémités circonférentielles respectives des plaques de fixation (16), chaque saillie (22) étant configurée pour former une butée contre laquelle viennent en butée les extrémités circonférentielles respectives des plaques de fixation (16) et/ou la portion de fixation (14), en évitant que la saillie (22) et les extrémités circonférentielles respectives des plaques de fixation (16) et/ou de la portion de fixation (14) soient mutuellement fixées ou solidaires, de sorte que, dans une condition de repos du mélangeur (9), les saillies (22) sont espacées angulairement des extrémités circonférentielles respectives des plaques de fixation (16) et/ou de la portion de fixation (14) de l'élément d'agitation 12.

2. Un mélangeur selon la revendication 1, dans lequel la portion de fixation (14) de l'élément d'agitation (12) est soudée en au moins un point aux surfaces de connexion (17) des plaques de fixation (16) et/ou à un bord radialement extérieur (18) de chacune desdites plaques de fixation (16), s'étendant sur un arc circonférentiel de l'arbre (10) et contigu à une surface de connexion respective (17).

3. Un mélangeur selon la revendication 2, dans lequel la portion de fixation (14) de l'élément d'agitation (12) est soudée auxdits bords radialement extérieurs (18) des plaques de fixation (16) de manière continue le long de la majeure partie de l'extension angulaire desdits bords (18).

4. Un mélangeur selon la revendication 2, dans lequel la portion de fixation (14) de l'élément d'agitation (12) est soudée auxdits bords radialement extérieurs (18) des plaques de fixation (16) en une pluralité de points espacés angulairement le long desdits bords (18).

5. Un mélangeur selon la revendication 1, dans lequel la portion de fixation (14) de l'élément d'agitation (12) est boulonnée aux surfaces de connexion (17) des plaques de fixation (16) en un ou plusieurs points.

6. Un mélangeur selon la revendication 5, comprenant un ou plusieurs moyens de retenue (20) qui comprennent des éléments allongés (21), au moins partiellement filetés et traversant axialement les deux plaques de fixation (16), lesdits éléments allongés (21) s'étendant sur toute la distance axiale entre les surfaces de connexion (17) et étant reliés à leurs extrémités à chacune desdites plaques de fixation (16).

7. Un mélangeur selon la revendication 1, dans lequel chaque saillie (22) est solidaire des extrémités circonférentielles respectives des plaques de fixation (16).

8. Un procédé d'assemblage d'un mélangeur pour fermenteur de biogaz, comprenant les étapes consistant à :
a) prévoir un arbre (10) ;
b) prévoir au moins un élément d'agitation (12), comprenant une portion de fixation (14) configurée pour entourer circonférentiellement une partie de l'arbre (10) ; c) fixer à l'arbre (10) une paire de plaques de fixation (16), faisant saillie radialement depuis l'arbre (10) et s'étendant circonférentiellement le long d'un arc angulaire dudit arbre (10), lesdites plaques de fixation (16) ayant des surfaces de connexion respectives (17) tournées l'une vers l'autre et espacées suivant la direction axiale de l'arbre (10) ; et fixer une paire de saillies (22) à l'arbre (10), faisant saillie radialement depuis l'arbre (10) à partir de parties diamétralement opposées dudit arbre (10), lesdites saillies 22 étant tournées l'une vers l'autre au niveau d'extrémités circonférentielles respectives des plaques de fixation (16) et/ou de la portion de fixation (14), en évitant que la saillie (22) et les extrémités circonférentielles respectives des plaques de fixation (16) et/ou de la portion de fixation (14) soient mutuellement fixées ou solidaires, de sorte que, dans une condition de repos du mélangeur (9), les saillies (22) puissent être espacées angulairement des extrémités circonférentielles respectives des plaques de fixation (16) et/ou de la portion de fixation (14) de l'élément d'agitation (12) ; et
d) fixer ladite portion de fixation (14) de l'élément d'agitation (12) auxdites surfaces de connexion (17) des plaques de fixation (16) et/ou à un bord radialement extérieur (18) de chacune desdites plaques de fixation (16), s'étendant sur un arc circonférentiel de l'arbre (10) et contigu à une surface de connexion respective (17).

9. Un procédé selon la revendication 8, dans lequel l'étape d) est réalisée en soudant la portion de fixation (14) en au moins un point aux surfaces de connexion (17) des plaques de fixation (16) et/ou à un bord radialement extérieur (18) de chacune desdites plaques de fixation (16), s'étendant sur un arc circonférentiel de l'arbre (10) et contigu à une surface de connexion respective (17), ou en boulonnant ladite portion de fixation (14) aux surfaces de connexion (17) des plaques de fixation (16) en un ou plusieurs points.
